# EUROPEAN PATENT APPLICATION

(11) **EP 1 890 017 A1**
(43) Date of publication of application: **20.02.2008**
(21) Application number: 07113757.4
(22) Date of filing: 03.08.2007
(51) Int. Cl.: F01N 3/20, F02D 41/02

(54) **Internal combustion engine and method of controlling the same**

(30) Priority: 08.08.2006 JP 2006215180
(71) Applicant: NISSAN MOTOR CO., LTD., Yokohama-shi, Kanagawa 221-0023 (JP)
(72) Inventor: Mori, Kouichi, 560-2, Okatsukoku Atsugi-shi Kanagawa 243-0192 (JP); Inoue, Takao, 560-2, Okatsukoku Atsugi-shi Kanagawa 243-0192 (JP); I, Sunki, 560-2, Okatsukoku Atsugi-shi Kanagawa 243-0192 (JP)
(74) Representative: Holmes, Matthew William

(57) **Abstract**

A method for controlling an exhaust system for an internal combustion engine of a vehicle includes flowing exhaust gas to a main catalytic converter (4) provided in a main passage (3), flowing exhaust gas to a bypass catalytic converter (8) provided in a bypass passage (7), detecting a predetermined condition related to a poisoning amount of the bypass catalytic converter, and blocking the main passage at least partially in response to the satisfaction of the predetermined condition, thereby causing more of the exhaust gas to flow to the bypass passage.

## Description

The present invention relates to an internal combustion engine and a method of controlling the same. Aspects of the invention relate to a method, to an exhaust system, to an engine and to a vehicle.

Conventionally, when a main catalytic converter is disposed relatively downstream of an exhaust system underneath an automobile, an exhaust gas cannot be sufficiently purified between the cold start-up of an internal combustion engine and the full activation of a catalytic converter. However, if the catalytic converter is disposed upstream of the exhaust system closer to the engine, the durability or lifespan of the catalyst can be significantly compromised due to thermal deterioration.

To address this problem, Japanese Laid-Open Patent Publication No. 2005-351088 has proposed an exhaust apparatus, wherein a bypass passage is disposed parallel to the upstream portion of a main flow passage having a main catalytic converter. Further, a bypass catalytic converter is disposed in the bypass passage. A flow path switching valve is configured to introduce the exhaust gas into the bypass passage immediately after the cold start-up of the engine. As such, since the bypass catalytic converter is disposed more upstream of the exhaust system relative to the main catalytic converter, it can be activated more rapidly to thereby allow a faster purification of exhaust gas.

Japanese Laid-Open Patent Publication No. 2001-82131 discloses a purification system for an exhaust gas of an internal combustion engine. A main NOx catalyst is disposed downstream of a SOx absorbent material. A sub-NOx catalyst is disposed in a bypass passage. The flow rates of exhaust gases in the main NOx and sub-NOx catalysts are controlled to regenerate SOx poisoning in said catalysts depending on the SOx absorbing amounts of the main NOx and sub-NOx catalysts when at least one of such absorbing amounts reaches a reference value.

However, a catalyst disposed underneath the internal combustion engine is difficult to poison. This is because hot exhaust gas flows from the internal combustion engine to keep the catalyst at high temperature compared to the catalyst disposed underneath the automobile. In the purification system including a bypass catalytic converter bypassing a main passage, the exhaust gas flows through the bypass catalytic converter disposed underneath the internal combustion engine in a start-up and is then switched to flow through the main passage during a normal operation. However, even during the normal operation, a part of the exhaust gas flows through the bypass passage. For this reason, the exhaust gas still flows through the bypass passage to apply a small amount of heat to the catalytic converter. That is, a part of the exhaust gas always flows to accumulate sulfuric poisoning in the catalyst displaced in the bypass passage since the temperature does not increase to avoid poisoning.

It is an aim of the invention to address this issue and to improve upon known technology. Embodiments of the invention may provide an exhaust system having superior exhaust purification without increasing costs or the number of components, which can reduce productivity, a method of controlling an internal combustion engine for a vehicle, which is capable of easily performing regeneration from the poisoning of the catalytic converter and/or a method of controlling an internal combustion engine for a vehicle, which is capable of easily performing regeneration from the poisoning of the catalytic converter without increasing costs or the number of components. Other aims and advantages of the invention will become apparent from the following description, claims and drawings.

Aspects of the invention therefore provide a method, an exhaust system, an engine and a vehicle as claimed in the appended claims.

According to another aspect of the invention there is provided a method for controlling an exhaust system for an internal combustion engine of a vehicle, comprising flowing exhaust gas to a main catalytic converter provided in a main passage, flowing exhaust gas to a bypass catalytic converter provided in a bypass passage, detecting a predetermined condition related to a poisoning amount of the bypass catalytic converter and blocking the main passage at least partially in response to the predetermined condition, thereby causing more of the exhaust gas to flow to the bypass passage.

In an embodiment, blocking is in response to at least one of deceleration of the vehicle, a detection of a decrease in a stepped amount of an accelerator pedal and a fuel cut-off of the internal combustion engine.

In an embodiment, the predetermined condition of the poisoning amount is satisfied after at least one of a predetermined driving distance and a predetermined time is elapsed since the main passage is opened to start the flow of the exhaust gas to the main passage.

In an embodiment, the predetermined time or predetermined driving distance is determined depending on an operating condition of the internal combustion engine after the main passage is opened.

In an embodiment, the blocking is performed by a flow path switching valve for opening/closing the main passage. The at least one of the predetermined time and the predetermined driving distance may be determined depending on a valve opening degree of the flow path switching valve.

In an embodiment, as the valve opening degree of the flow path switching valve becomes larger, at least one of the predetermined time and the predetermined driving distance is set to be longer.

In an embodiment, as the engine speed and load of the internal combustion engine are greater, the at least one of the predetermined time and the predetermined driving distance is set to be shorter.

According to a further aspect of the invention there is provided an exhaust system for an internal combustion engine of a vehicle, comprising a main passage for an exhaust gas discharged from a cylinder, a main catalytic converter provided in the main passage, a bypass passage having a cross-sectional area smaller than the main passage, wherein the bypass passage branches from the main passage at a main catalytic converter upstream side and connects at the main catalytic converter upstream side, a bypass catalytic converter provided in the bypass passage, a main passage blocking means for at least partially closing the main passage so as to allow the exhaust gas discharged from the cylinder to flow to the bypass passage and a main passage opening/closing switching means for at least partially closing the main passage blocking means so as to allow the exhaust gas to flow to the bypass passage when a predetermined condition related to a poisoning amount of the bypass catalytic converter is satisfied.

The engine may comprise a main passage opening/closing switching means for closing the main passage blocking means when the predetermined condition of the poisoning amount is satisfied and the vehicle is decelerated.

In an embodiment, the engine comprises means for detecting an accelerator pedal stepped amount and main passage opening/closing switching means for closing the main passage blocking means when the predetermined condition of the poisoning amount is satisfied and the accelerator pedal stepped amount is decreased.

In an embodiment, the bypass catalytic converter provided uses a tertiary catalyst.

According to a still further aspect of the invention there is provided an exhaust system for an internal combustion engine of a vehicle, comprising a main passage for an exhaust gas discharged from a cylinder, a main catalytic converter provided in the main passage, a bypass passage having a cross-sectional area smaller than the main passage, wherein the bypass passage branches from the main passage at a main catalytic converter upstream side and connects at the main catalytic converter upstream side, a bypass catalytic converter provided in the bypass passage, a flow path switching valve disposed in the main passage downstream of where the bypass passage branches from the main passage and an actuator configured to at least partially close the flow path switching valve when a predetermined condition related to a poisoning amount of the bypass catalytic converter is satisfied.

For example, a method for controlling an exhaust system for an internal combustion engine of a vehicle may include flowing exhaust gas to a main catalytic converter provided in a main passage, flowing exhaust gas to a bypass catalytic converter provided in a bypass passage, detecting a predetermined condition related to a poisoning amount of the bypass catalytic converter, and blocking the main passage at least partially in response to the satisfaction of the predetermined condition, thereby causing more of the exhaust gas to flow to the bypass passage.

An exhaust system for an internal combustion engine of a vehicle may include a main passage for an exhaust gas discharged from a cylinder, a main catalytic converter provided in the main passage, and a bypass passage having a cross-sectional area smaller than the main passage. The bypass passage branches from the main passage at a main catalytic converter upstream side and connects at the main catalytic converter upstream side. A bypass catalytic converter is provided in the bypass passage. A main passage blocking means is provided for at least partially closing the main passage so as to allow the exhaust gas discharged from the cylinder to flow to the bypass passage. A main passage opening/closing switching means is provided for at least partially closing the main passage blocking means so as to allow the exhaust gas to flow to the bypass passage when a predetermined condition related to a poisoning amount of the bypass catalytic converter is satisfied.

An exhaust system for an internal combustion engine of a vehicle may include a main passage for an exhaust gas discharged from a cylinder, a main catalytic converter provided in the main passage, and a bypass passage having a cross-sectional area smaller than the main passage. The bypass passage branches from the main passage at a main catalytic converter upstream side and connects at the main catalytic converter upstream side. A bypass catalytic converter is provided in the bypass passage. A flow path switching valve is disposed in the main passage downstream of where the bypass passage branches from the main passage. An actuator is configured to at least partially close the flow path switching valve when a predetermined condition related to a poisoning amount of the bypass catalytic converter is satisfied.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Fig. 1 is a schematic layout of passages as well as a controller used in an exhaust system of an internal combustion engine;
Fig. 2 is a flow chart of controlling regeneration of a poisoned bypass catalytic converter in accordance with a first embodiment of the present invention;
Fig. 3 is a flow chart of controlling regeneration of a poisoned bypass catalytic converter in accordance with a second embodiment of the present invention;
Fig. 4 is a map for calculating an increment from engine RPM and load; and
Fig. 5 is a map for calculating an increment from engine RPM and intake amount of air.

The following embodiments are applied to an I-type 4-cylinder internal combustion engine for illustrative purposes. Those having ordinary skill in the art will appreciate that the present invention is not limited to any particular internal combustion engine.

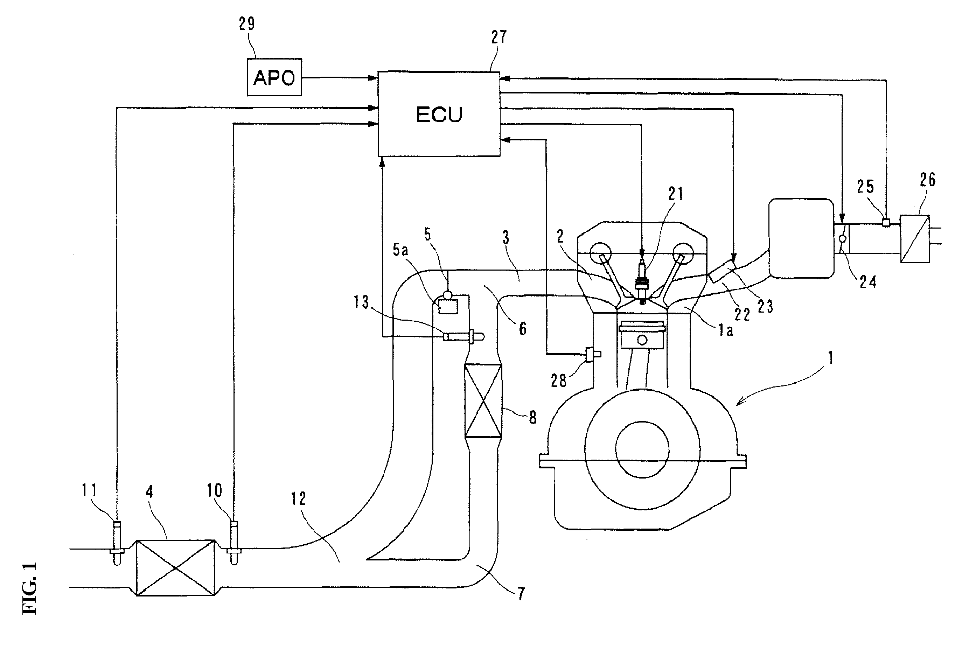

Fig. 1 is a schematic layout of passages as well as a controller used in the exhaust system of the internal combustion engine.

A cylinder head 1a of the internal combustion engine 1 has exhaust ports 2 laterally opened from the first to fourth cylinders, which are arranged inline. Each of the exhaust ports 2 is connected to each of the four main passages 3. The four main passages 3 of the first to fourth cylinders are joined together at one flow passage. A main catalytic converter 4 is disposed downstream of the flow passage. The main catalytic converter 4, which is located underneath the vehicle, has a large capacity and contains a three-way catalyst as well as a hydrocarbon (HC) trap catalyst. The main passages 3 and the main catalytic converter 4 serve as a main flow passage for allowing the exhaust gas to pass during normal operations. Further, a flow path switching valve 5, which acts as a main passage closing means for opening or closing the main passages 3, is placed at a junction of the four main passages 3 connected to the cylinders. The flow path switching valve 5 is driven by an actuator 5a.

Four bypass passages 7 are branched off from the main passages 3 in order to ensure proper flow. Each of the bypass passages 7 has a cross-sectional area smaller than those of the main passages 3. The branch point 6 (i.e., an upstream end of the bypass passages 7) should be positioned upstream as possible in the main passage 3. The four bypass passages 7 are joined together to form one flow passage downstream. A bypass catalytic converter 8 is placed immediately after the junction. The bypass catalytic converter use a three-way (or tertiary) catalyst. The bypass catalytic converter 8 has a capacity smaller than that of the main catalytic converter 4. The bypass catalytic converter 8 contains a catalyst, which can be optimally activated in low temperatures. The downstream side of the bypass passages 7, which extends from an outlet of the bypass catalytic converter 8, is connected to the main passages 3 at a junction 12 (corresponding to the upstream side of the main catalytic converter 4 and the downstream side of the flow path switching valve 5).

Further, air-fuel ratio sensors 10, 11 and 13 are disposed at the inlet and outlet of the main catalytic converter 4 and at the inlet of the bypass catalytic converter 8, respectively.

The internal combustion engine 1 comprises a spark plug 21, an intake passage 22, and a fuel injection valve 23 located at the intake passage 22. An electronically controlled throttle valve 24, which can be opened or closed by using an actuator such as a motor, is disposed at the upstream side of the intake passage 22. Additionally, an air flow meter 25 for detecting the amount of intake air is mounted at the downstream side of an air cleaner 26.

An engine control unit 27 controls various control parameters of the internal combustion engine 1 (e.g., an amount of fuel injection by the fuel injection valve 23, spark timing of the spark plug 21, an opening degree of the throttle valve 24, open/close conditions of the flow path switching valve 5, etc.). The detected signals from other sensors, such as a coolant temperature sensor 28, an engine speed sensor 30 for detecting an engine speed, and a sensor 29 for detecting the opening degree of an accelerator pedal (stepped degree) operated by the driver, are transmitted to the engine control unit 27.

The main passages 3 can be closed by the flow path switching valve 5 driven by the actuator 5a when the temperature of the engine or the exhaust gas is low after initiating cold start-up. Thus, the entire exhaust gas discharged from the cylinders flows from the branch point 6 to the bypass catalytic converter 8 through the bypass passages 7. The bypass catalytic converter 8 can be rapidly activated since it is disposed at the upstream side of the exhaust system (i.e., near the exhaust port 2) and is relatively small in size. This allows the exhaust gas to be purified at an earlier stage.

If the temperature of the engine or the exhaust gas is increased due to a warming-up process, the flow path switching valve 5 becomes open since the catalyst of the main catalytic converter 4 is fully activated as one of the trigger conditions. As such, most of the exhaust gas discharged from the cylinders passes the main catalytic converter 4 through the main passages 3. When the bypass passages 7 are not closed, most of the exhaust gas does not flow through the bypass flow passages 7. Rather, the exhaust gas flows through the main flow passages 3. This is because the cross-sectional areas of the bypass passages 7 are smaller than those of the main passages 3 and the bypass catalytic converter 8 is disposed in the bypass passages 7, thereby causing differential ventilation resistance.

For this reason, the main passage blocking means for switching the exhaust gas flow does not require any complicated switching valve and can simply comprise the flow path switching valve 5 to close or open the main passage 3. Further, high temperature exhaust gas cannot flow to the bypass catalytic converter 8, thereby preventing thermal deterioration of the catalytic converter 8.

Also, when the flow path switching valve 5 is closed to allow the exhaust gas to flow to the bypass passage 7, the amount of exhaust gas cannot increase to cope with a highspeed area or high-load area. Thus, the flow path switching valve 5, which is controlled to be closed, is limited to a case where engine operating conditions (load and engine RPM) are within a predetermined range of low speed and load. In other ranges, the flow path switching valve 5 is controlled to be open.

When the flow path switching valve 5 is open, the exhaust gas hardly flows to the bypass passage 7, whereas a part of the exhaust gas flows to the bypass passage. Thus, the temperature of the bypass catalytic converter 8 can be maintained at a predetermined temperature (e.g., 500 °C) by a part of the exhaust gas. For example, even when the flow path switching valve 5 is closed again, the exhaust purification of the bypass catalytic converter 8 can be expected after switching.

Since a part of the exhaust gas always flows as discussed above, the bypass catalytic converter 8 can be maintained at the predetermined temperature (e.g., 500 °C). However, it is not exposed to any exhaust gas at high temperature and thus, it cannot be maintained at sufficiently high temperature to relieve the poisoning (e.g., 800 °C).

Therefore, since a part of the exhaust gas always flows under such a temperature, its poisoning amount increases little by little. That is, although the poisoning is relatively restrained since the bypass catalytic converter 8 is maintained at the predetermined temperature, its poisoning always occurs. In order to maintain a predetermined catalyst reaction in the bypass catalytic converter 8, it is necessary to regenerate the poisoned bypass catalytic converter 8. Thus, when the predetermined conditions related to the poisoning amount of the bypass catalytic converter 8 are met, it is configured to allow the exhaust gas to flow to the bypass passage 7 by closing the flow path switching valve 5 and regenerate the poisoned bypass catalytic converter 8.

Further, as for poisoning in the present embodiment, the so-called sulfuric poisoning is presumed wherein an original catalyst reaction of the catalyst is deteriorated by accumulating sulfur oxide (SOx) in the bypass catalytic converter 8. Once a fuel is combusted, sulfur in the fuel is oxidized to generate sulfur oxide (SOx) such as SO₂ or SO₃. The sulfur oxide tends to form stable sulphate and is easily accumulated within the catalyst when the time passes after the sulfur oxide is absorbed into the catalyst. Further, along with the increased accumulating amount of the sulfur oxide (SOx) accumulated within the catalyst, sulfur poisoning is proceeded wherein an original catalyst reaction of the catalyst is deteriorated.

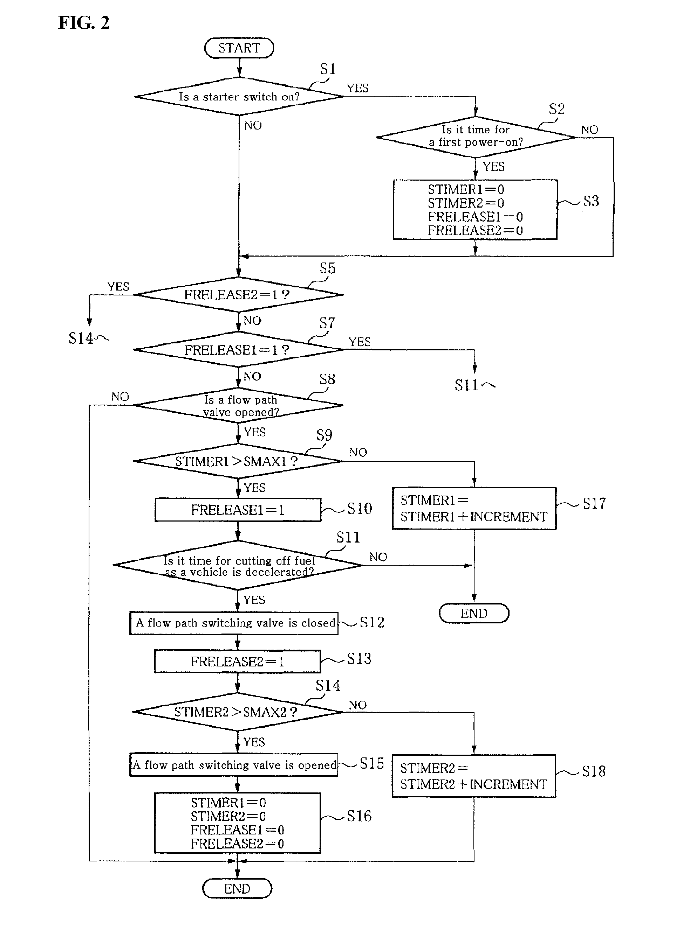

Fig. 2 is a flow chart illustrating the flow of control when the poisoned bypass catalytic converter 8 is regenerated.

In step S1, it is determined whether a starter switch turns on by a key (e.g., an engine key) operation by a driver. If the starter switch turns on, then the process proceeds to step S2. If the starter switch does not turn on, then the process proceeds to step S5, as explained below.

In step S2, it is determined whether a process is at a time of a first power-on after a factory shipment. If the process is at the time of a first power-on after a factory shipment, then the process proceeds to step S3. However, if the process is not at the time of a first power-on after a factory shipment, then the process proceeds to step S5.

In step S3, a process proceeds to step S5 wherein STIMER1 and STIMER2 (parameters related to the poisoning of the bypass catalytic converter 8) are reset to "0." FRELEASE1 and FRELEASE2 (flags related to the poisoning of the bypass catalytic converter 8) are each set to be "0.".

FRELEASE1 is a flag showing the presence/absence of a regeneration demand on the bypass catalytic converter 8. When the regeneration conditions of the bypass catalytic converter 8 are established, FRELEASE1 is set to be "1." When the regeneration of the bypass catalytic converter 8 is completed, FRELEASE1 is set to be "0." FRELEASE2 is a flag established when the flow path switching valve 5 is closed to regenerate the bypass catalytic converter 8. When FRELEASE2 is set to "1," the flow path switching valve 5 is closed to regenerate the bypass catalytic converter 8. When FRELEASE2 is set to "0," the flow path switching valve 5 is open. STIMER1 is a timer for checking a time elapsed during an operation of the internal combustion engine 1 after the flow path switching valve 5 is open. Since the poisoning amount of the bypass catalytic converter 8 increases as the time elapses after the flow path switching valve 5 is open, STIMER1 is a parameter related to the poisoning amount of the bypass catalytic converter 8. STIMER2 is a timer for checking a time elapsed after FRELEASE2 is set to "1" so as to close the flow path switching valve 5. Since the poisoning amount of the bypass catalytic converter 8 decreases as a regenerating time becomes longer, STIMER2 is also a parameter related to the poisoning amount of the bypass catalytic converter 8.

In step S5, it is determined whether FRELEASE2 is "1." If FRELEASE2 is "1," then the process proceeds to step S14, as explained below. If FRELEASE2 is not "1," then the process proceeds to step S7.

In step S7, it is determined whether FRELEASE1 is "1." If FRELEASE1 is "1," then the process proceeds to step S11, as explained below. If FRELEASE1 is not "1," then the process proceeds to step S8.

In step S8, it is determined whether the flow path switching valve 5 is open. If the flow path switching valve 5 is open, then the process proceeds to step S9. In step S8, if the flow path switching valve 5 is not open, then the routine ends. This is because it is presently a cold engine state such that the main catalytic converter 4 has not been activated in the present cooling state.

In step S9, it is determined whether STIMER1 is larger than SMAX1. If STIMER1 is larger than SMAX1, then the process proceeds to step S10. If STIMER1 is not larger than SMAX1, then the process proceeds to step S17, as explained below. SMAX1 corresponds to a time required until the poisoning amount of the bypass catalytic converter 8 increases to an amount where the bypass catalytic converter 8 needs to be regenerated when the flow path switching valve 5 is open continuously during an operation of the internal combustion engine. In other words, it corresponds to a time required until the poisoning amount increases to the point that the bypass catalytic converter 8 cannot perform a certain catalyst reaction. Such a time can be preset according to an experimental adjustment, etc. That is, SMAX1 corresponds to a threshold of the predetermined condition of the poisoning amount related to the poisoning amount of the bypass catalytic converter 8.

In step S10, FRELEASE is set to "1" and the process proceeds to step S11.

In step S11, it is determined whether a vehicle is now decelerating and fuel cut-off is being carried out. If the vehicle is decelerating and fuel cut-off is being carried out, then the process proceeds to step S12 so as to close the flow path switching valve 5. If not, then the routine ends.

In step S17, INCREMENT (a predetermined increment) is added to STIMER1 and STIMER1 is updated. Then, the routine ends. In the first embodiment, as discussed above, STIMER1 is a timer for checking a time elapsed during an operation of the internal combustion engine 1 after the flow path switching valve 5 is open. INCREMENT is substantially a time elapsed from a previous routine.

In step S12, when the flow path switching valve 5 is closed, the process proceeds to step S13 where FRELEASE2 is "1." Since the poisoned bypass catalytic converter 8 is regenerated, the internal combustion engine 1 is controlled by using known means to generate lean exhaust gas at high temperature.

In step S14, it is determined whether STIMER2 is larger than SMAX2. If STIMER2 is larger than SMAX2, then the process proceeds to step S15. If STIMER2 is not larger than SMAX2, then the process proceeds to step S18.

SMAX2 corresponds to a time required until the poisoning amount of the bypass catalytic converter 8 is removed by regeneration when the flow path switching valve 5 is closed continuously during an operation of the internal combustion engine 1. Such a time can be preset according to an experimental adjustment, etc.

In step S18, INCREMENT (a predetermined increment) is added to STIMER2 and STIMER2 is updated. Then, the routine ends. In the present first embodiment, as discussed above, STIMER2 is a timer for checking a time elapsed during an operation of the internal combustion engine 1 after the flow path switching valve 5 is closed. INCREMENT is substantially a time elapsed from a previous routine.

In step S15, a process proceeds to step S16 by opening the flow path switching valve 5. In step S16, STIMER1 and STIMER2 are reset to "0." Further, FRELEASE1 and FRELEASE2 (flags related to the poisoning of the bypass catalytic converter 8) are set to "0." Then, the routine ends.

In the first embodiment as discussed above, the exhaust gas is forced to flow to the bypass passage depending on the poisoning amount of the bypass catalytic converter 8. Further, the temperature of the bypass catalytic converter 8 increases such that the poisoning of the bypass catalytic converter 8 can be relieved.

In particular, the regeneration of the poisoned bypass catalytic converter 8 performed by closing the flow path switching valve 5 is carried out at the time of decelerating a vehicle. As such, the exhaust gas flows to the bypass passage to increase ventilation resistance, thereby facilitating the deceleration of a vehicle. Further, since the regeneration of the poisoned bypass catalytic converter 8 performed by closing the flow path switching valve 5 is carried out at fuel cut-off, the following effects can be achieved. Generally, during the operation of an internal combustion engine, if a main passage is blocked by a flow path switching valve to regenerate a bypass catalyst, then the combustion efficiency deteriorates. However, the regeneration of the poisoned bypass catalytic converter 8 performed by closing the flow path switching valve 5 is carried out at fuel cut-off such that it is not necessary to perform an operation causing a deterioration in the combustion efficiency.

Further, the following effects can be achieved. When relieving the poisoning, the bypass catalytic converter 8 is required to be exposed to high temperature. However, in the case of the present embodiment, when the flow path switching valve 7 is open, merely a part of the exhaust gas flows to the bypass catalyst side such that an inside of the catalyst is maintained in a stoichiometric or rich mixture. Therefore, if the flow path switching valve 5 is closed when fuel is cutoff while decelerating the vehicle, unburned fuel in the catalytic converter and air are reacted to increase the temperature of the catalytic converter. That is, prior to closing the flow path switching valve 5 when decelerating a vehicle, the catalyst temperature (e.g., approximately 500°C) increases to approximately 700°C to 800°C. Since the temperature of the poisoned bypass catalytic converter 8 can be increased without any additional injection of fuel, etc., the regeneration can be more efficiently performed without compromising fuel economy.

Further, in another embodiment, it is configured that when decelerating a vehicle, the flow path switching valve 5 is not always closed. The flow path switching valve 5 is closed when the poisoning amount exceeds a predetermined condition and a deceleration time is detected. Compared to switching a valve whenever decelerating the vehicle, the number of times in switching the valve can be reduced. Consequently, the service life of the valve and the purification system can be improved, as well as achieving cost advantages.

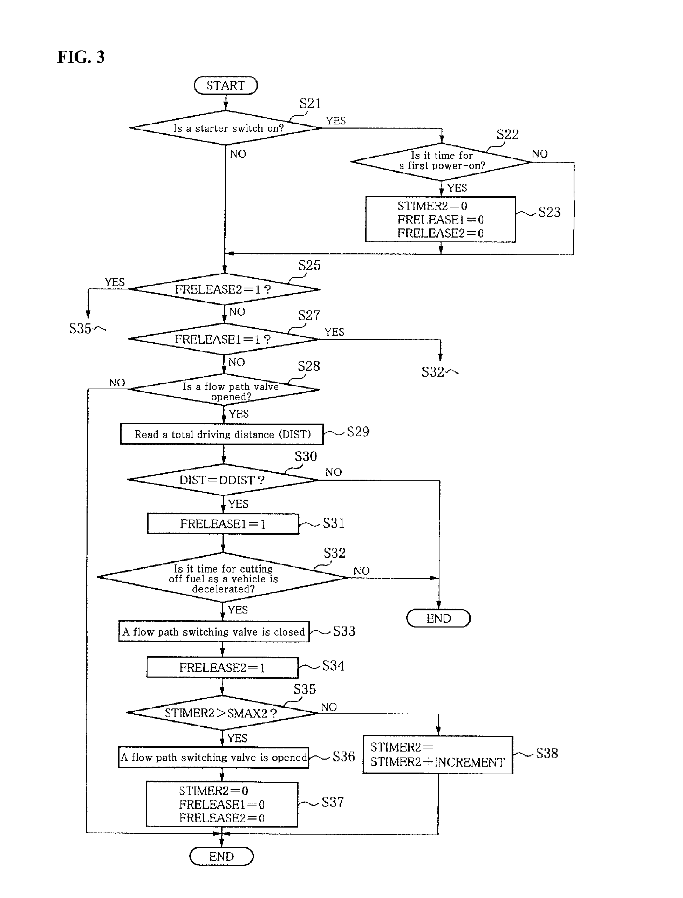

Next, a second embodiment of the present invention will be explained. Fig. 3 is a flow chart illustrating the flow of control when the poisoned bypass catalytic converter 8 is regenerated according to the second embodiment of the present invention.

In step S21, it is determined whether a starter switch turns on by a key (e.g., an engine key) operation by a driver. If the starter switch turns on, then the process proceeds to step S22. If the starter switch does not turn on, then the process proceeds to step S25, as explained below.

In step S22, it is determined whether it is at a time of a first power-on after a factory shipment. If it is at the time of a first power-on after a factory shipment, then the process proceeds to step S23. If it is not at a time of a first power-on after a factory shipment, then the process proceeds to step S25.

In step S23, a process proceeds to step S25 wherein STIMER2 (a parameter related to the poisoning of the bypass catalytic converter 8) is reset to "0." FRELEASE1 and FRELEASE2 (flags related to the poisoning of the bypass catalytic converter 8) are set to be "0."

FRELEASE1, FRELEASE2 and STIMER2 may be defined as described with respect to the first embodiment, which is discussed above.

In step S25, it is determined whether FRELEASE2 is "1." If FRELEASE2 is "1," then the process proceeds to step S35, as explained below. If FRELEASE2 is not "1," then the process proceeds to step S27.

In step S27, it is determined whether FRELEASE1 is "1." If FRELEASE1 is "1," then the process proceeds to step S32, as explained below. If FRELEASE1 is not "1," then the process proceeds to step S28.

In step S28, it is determined whether the flow path switching valve 5 is open. If the flow path switching valve 5 is open, then the process proceeds to step S29. If the flow path switching valve 5 is not open, then the routine ends. This is because it is presently a cold engine state such that the main catalytic converter 4 has not been activated in the present cooling state.

In step S29, a total driving distance (DIST) of a vehicle up to the present is read. Then, the process proceeds to step S30.

In step S30, it is determined whether the total driving distance (DIST) read in step S29 becomes a designated driving distance (DDIST). If the total driving distance (DIST) read in step S29 becomes a designated driving distance (DDIST), then it proceeds to step S31. If the total driving distance (DIST) read in step S29 does not become a designated driving distance (DDIST), then the routine ends.

The designated driving distance (DDIST) is a plurality of preset predetermined values. Whenever the vehicle drives to some extent, the generation of the poisoned bypass catalytic converter is carried out. Further, in the above step S30, it is determined that when the total driving distance (DIST) falls within a range of the designated driving distance (DDIST) ± a certain amount (A) (DDIST - A < DIST < DDIST + A), DIST equals to DDIST.

In step S31, FRELEASE is set to "1" and the process proceeds to step S32.

In step S32, it is determined whether a vehicle is being decelerated and fuel cut-off is being carried out. If the fuel cut-off is being carried out at the time of decelerating the vehicle, then the process proceeds to step S33 wherein the flow path switching valve 5 is closed. If the fuel cut-off is not being carried out at the time of decelerating the vehicle, then the routine ends.

In step S33, when the flow path switching valve 5 is closed, the process proceeds to step S34 and FRELEASE2 is set to "1." Since the poisoned bypass catalytic converter 8 is regenerated, the internal combustion engine 1 is controlled by using known means in order to generate lean exhaust gas at high temperature.

In step S35, it is determined whether STIMER2 is greater than SMAX2. If STIMER2 is greater than SMAX2, then the process proceeds to step S36. If STIMER2 is not greater than SMAX2, then the process proceeds to step S38.

SMAX2 corresponds to a time required until the poisoning amount of the bypass catalytic converter 8 is removed by regeneration when the flow path switching valve 5 is closed continuously during an operation of the internal combustion engine 1. Such a time can be preset according to an experimental adjustment, etc.

In step S38, INCREMENT (a certain increment) is added to STIMER2 and STIMER2 is updated. Then, the routine ends. Further, in the second embodiment of the present invention, STIMER2 is a timer for checking a time elapsed during an operation of the internal combustion engine 1 after the flow path switching valve 5 is closed. INCREMENT is substantially a time elapsed from a previous routine.

In step S36, a process proceeds to S37 wherein the flow path switching valve 5 is open. In step S37, STIMER2 is reset to "0." FRELEASE1 and FRELEASE2 (flags related to the poisoning of the bypass catalytic converter 8) are set to "0." Then, the routine ends.

The regeneration of the poisoned bypass catalytic converter 8 may be carried out whenever a vehicle is driven for a preset predetermined distance. Alternatively, the time required until the regeneration of the bypass catalytic converter 8 is carried out after the flow path switching valve 5 is open may be determined according to the operating conditions of the internal combustion engine 1 after the flow path switching valve 5 is opened. Specifically, it is possible to calculate INCREMENT in step S17 of the flow chart shown in Fig. 2 from an INCREMENT computing map previously stored in an engine control unit.

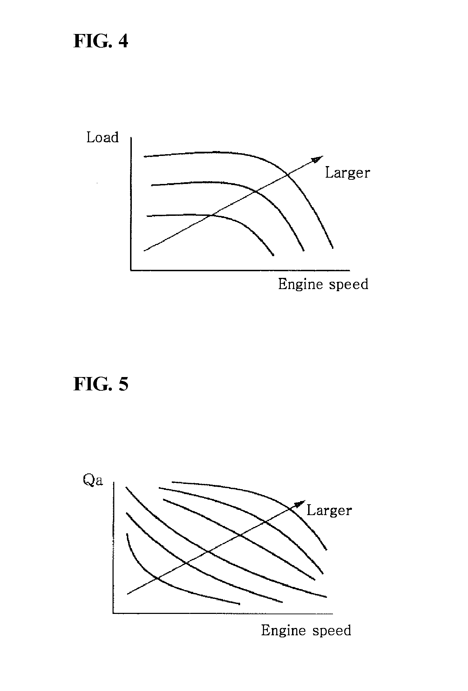

An example of the INCREMENT computing map is shown in Figs. 4 and 5. Fig. 4 shows INCREMENT calculated from engine RPM and load. In a high rotation and load operation, a calculated INCREMENT increases. Further, the time required for satisfying a regeneration condition of the bypass catalytic converter 8 for setting FRELEASE1 as "1" becomes relatively shorter. Fig. 5 shows INCREMENT calculated from an engine RPM and intake air amount (Qa). In the high rotation and large intake air operation, a calculated INCREMENT increases and the time required for satisfying a regeneration condition of the bypass catalytic converter 8 for setting FRELEASE1 as "1" becomes shorter.

In the second embodiment, the driving distance required until the regeneration of the bypass catalytic converter 8 is carried out is preset. Alternatively, the driving distance required for starting the regeneration of the bypass catalytic converter 8 is determined depending on the operating state of the internal combustion engine 1 after the flow path switching valve 5 is opened. In such a case, the driving distance required for starting the regeneration of the bypass catalytic converter 8 becomes shorter in the high rotation and load operation.

In one embodiment, the flow path switching valve 5 may be partially opened between a complete closing and a complete opening. Specifically, in order to improve the precise control of an air-fuel ratio of the internal combustion engine 1, the flow path switching valve 5 may be partially opened by actively controlling the valve opening degree of the flow path switching valve 5. The air-fuel ratio may be detected by an air-fuel ratio sensor 13 located upstream of the bypass catalytic converter 8 at the time of low-load. Further, the internal combustion engine 1 may include an exhaust gas recirculation (EGR) system for re-circulating a part of the exhaust gas to an induction system depending on the operating conditions. In such a case, the flow path switching valve 5 may be partially opened by actively controlling the valve opening degree of the flow path switching valve 5. In order to improve the decelerating effects at the time of decelerating a vehicle, the flow path switching valve 5 may be partially opened by actively controlling the valve opening degree of the flow path switching valve 5. Further, when the main catalytic converter 4 has not been warmed-up, the flow path switching valve 5 may be partially opened to minimize output loss and to decrease an emission by exhaust gas purification in the bypass catalytic converter 8. This warms-up the main catalytic converter 4.

When considering the case wherein the flow path switching valve 5 may be partially opened, it is also possible to compute the time required until the regeneration of the poisoned bypass catalytic converter 8 after the flow path switching valve 5 is opened during an operation of the internal combustion engine 1. In such a case, the regeneration of the bypass catalytic converter 8 can be more efficiently carried out by computing an opening degree compensating coefficient K depending on the valve opening degree of the flow path switching valve 5. It is further carried out by correcting STIMER1 through multiplying the opening degree compensating coefficient K by IMCREMENT in step S17 of the first embodiment or INCREMENT computed from the INCREMENT computing map in Figs. 4 and 5. Further, the opening degree compensating coefficient K is a characteristic coefficient inversely proportional to the valve opening degree of the flow path switching valve 5. That is, when the flow path switching valve 5 is completely closed, the amount of exhaust gas flowing to the bypass passage is at maximum. As the valve opening degree increases, the amount of exhaust gas flowing to the bypass passage decreases such that the poisoning amount itself becomes smaller. Therefore, as the valve opening degree becomes larger, the time required until the regeneration of the bypass catalytic converter 8 is carried out becomes relatively longer.

Further, alternatively, the driving distance required until the generation of the bypass catalytic converter 8 is carried out may be determined. This may depend on the valve opening degree of the flow path switching valve 5 after the flow path switching valve is opened during an operation of the internal combustion engine 1. In such a case, as the valve opening degree of the flow path switching valve 5 becomes greater, the driving distance required until the generation of the bypass catalytic converter 8 is carried out becomes relatively longer.

Technical concepts of the present invention, which can be anticipated from the above embodiments, will be explained below along with the effects thereof.

According to embodiments of the present invention, the internal combustion engine for the vehicle comprises a main passage connected to a cylinder for flowing exhaust gas discharged from a cylinder, a main catalytic converter interposed in the main passage, a bypass passage having a cross-sectional area smaller than the main passage, wherein the bypass passage branches from the main passage at an upstream side of the main catalytic converter, a bypass catalytic converter interposed in the bypass passage, and a main passage blocking means for closing the main passage so as to allow the exhaust gas discharged from the cylinder to flow to the bypass passage. The main passage blocking means is temporarily closed so as to allow the exhaust gas to flow to the bypass passage when predetermined conditions related to the poisoning amount of the bypass catalytic converter are satisfied and the main passage is not closed by the main passage blocking means.

The exhaust gas, which does not flow to the bypass catalytic converter during a normal operation, flows to the bypass passage depending on the poisoning amount of the bypass catalytic converter such that the regeneration of the poisoned bypass catalytic converter can be carried out. Further, when the regeneration of the bypass catalytic converter is carried out at fuel cut-off, an exhaust gas-fuel ratio can be allowed to be a lean mixture, thereby efficiently carrying out the regeneration of the poisoned bypass catalytic converter. Also, if the regeneration of the bypass catalytic converter is carried out at the time of decelerating the vehicle, the exhaust gas flows to the bypass passage, thereby increasing ventilating resistance and facilitating deceleration of the vehicle. Alternatively, although a deceleration is determined from the stepped amount of the accelerator pedal 29 in the above embodiments, deceleration may be determined from a decrease in the engine speed of other internal combustion engines.

According to embodiments of the present invention, a method for controlling the internal combustion engine of the vehicle described above , a fuel cut-off is performed at the time of decelerating a vehicle. Further, the main passage blocking means is temporarily closed when the predetermined conditions of the poisoning amount are satisfied and the vehicle is decelerated or a fuel cut-off is carried out at the time of decelerating the vehicle. When the regeneration of the poisoned bypass catalytic converter performed by closing the flow path switching valve is carried out at the time of decelerating the vehicle, the exhaust gas flows to the bypass passage, thereby increasing ventilating resistance and facilitating deceleration of a vehicle. Further, when the regeneration of the poisoned bypass catalytic converter performed by closing the flow path switching valve is carried out at the time of cutting off a fuel, an exhaust gas-fuel ratio can be easily allowed to be lean so as to efficiently carry out the regeneration of the poisoned bypass catalytic converter.

Estimation of the poisoning amount may be carried out, for example, by the time elapsed after the main passage blocking means is opened, after which the exhaust gas starts to flow to the main passage. In such a case, a predetermined condition of the poisoning amount is set to be satisfied after the main passage blocking means in a previous time is opened. The exhaust gas then starts to flow to the main passage. This is because the poisoning of the bypass catalytic converter starts after the main passage blocking means is opened and the exhaust gas then starts to flow to the main passage.

Further, the poisoning amount may be related to the driving distance of a vehicle. At this time, the predetermined condition of the poisoning amount is set to be satisfied whenever the vehicle drives a predetermined driving distance.

Alternatively, such a predetermined time of the poisoning amount or a predetermined driving distance may be determined depending on the operating state of the internal combustion engine of a vehicle, while the main passage blocking means is open. That is, according to the operating state of the internal combustion engine, as the engine speed and the load of the internal combustion engine are greater, the poisoning amount becomes larger. Thus, for example, it may be determined that the regeneration is required when the poisoning amount in every unit time or unit distance is computed by considering the operating state of the internal combustion engine in every unit time or unit distance and if an accumulated value of the poisoning amount in every unit time or unit distance exceeds a predetermined critical value of the poisoning amount.

Alternatively, such a predetermined time of the poisoning amount or a predetermined driving distance may be determined depending on the valve opening degree of the flow path switching valve, while the main passage blocking means is open. When the flow path switching valve 5 is completely closed, the amount of the exhaust gas flowing to the bypass passage is at maximum. Further, as the valve opening degree becomes greater, the amount of exhaust gas flowing to the bypass passage becomes smaller. Thus, the poisoning amount itself decreases as the valve opening degree increases.

Therefore, as the valve opening degree becomes greater, the above-predetermined time or driving distance of the predetermined conditions of the poisoning amount is set to be longer.

Alternatively, such a predetermined time of the poisoning amount or a predetermined driving distance may be determined depending on the operating state of the internal combustion engine of a vehicle. As the engine speed and load of the internal combustion engine become greater, the amount of the exhaust gas flowing to the bypass passage becomes larger. Thus, the poisoning amount itself becomes larger. Therefore, the above-predetermined time or driving distance of the predetermined conditions of the poisoning amount is set to be shorter as the engine speed and load of the internal combustion engine of a vehicle becomes greater.

According to embodiments of the present invention, since the exhaust gas flows to the bypass passage depending on the poisoning of the bypass catalytic converter, the regeneration of the poisoned bypass catalytic converter can be carried out.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

This application claims priority from Japanese Patent Application No. 2006-215180, filed 8th August 2006, the contents of which are expressly incorporated herein by reference.

## Claims

1. A method for controlling an exhaust system for an internal combustion engine of a vehicle, comprising:
flowing exhaust gas to a main catalytic converter provided in a main passage;
flowing exhaust gas to a bypass catalytic converter provided in a bypass passage;
detecting a predetermined condition related to a poisoning amount of the bypass catalytic converter; and
blocking the main passage at least partially in response to the predetermined condition, thereby causing more of the exhaust gas to flow to the bypass passage.

2. A method as claimed in claim 1, wherein blocking the main passage is in response to at least one of:
deceleration of the vehicle;
a decrease in a stepped amount of an accelerator pedal; and
a fuel cut-off of the internal combustion engine.

3. A method as claimed in claim 1, wherein the predetermined condition is satisfied after at least one of a predetermined driving distance and a predetermined time has elapsed since the main passage is opened to start the flow of the exhaust gas to the main passage.

4. A method as claimed in claim 3, wherein the predetermined time or predetermined driving distance is determined depending on an operating condition of the internal combustion engine after the main passage is opened.

5. A method as claimed in any preceding claim, wherein blocking the main passage is performed by a flow path switching valve for opening/closing the main passage, and wherein the at least one of the predetermined time and the predetermined driving distance is determined depending on a valve opening degree of the flow path switching valve.

6. A method as claimed in claim 5, wherein:
as the valve opening degree of the flow path switching valve becomes larger, at least one of the predetermined time and the predetermined driving distance is set to be longer; and/or
as the engine speed and load of the internal combustion engine are greater, the at least one of the predetermined time and the predetermined driving distance is set to be shorter.

7. An exhaust system for an internal combustion engine of a vehicle, comprising:
a main passage for an exhaust gas discharged from a cylinder;
a main catalytic converter provided in the main passage;
a bypass passage having a cross-sectional area smaller than the main passage, wherein the bypass passage branches from the main passage upstream of the main catalytic converter;
a bypass catalytic converter provided in the bypass passage;
main passage blocking means for at least partially closing the main passage so as to allow the exhaust gas discharged from the cylinder to flow to the bypass passage when a predetermined condition related to a poisoning amount of the bypass catalytic converter is satisfied.

8. An exhaust system as claimed in claim 7 comprising actuator means arranged to at least partially close the main passage blocking means when the predetermined condition is satisfied and:
the vehicle is decelerated;
an accelerator pedal stepped amount is decreased; and/or
a fuel supply to the engine is cut off.

9. An engine having an exhaust system as claimed in claim 7 or claim 8.

10. A vehicle having an exhaust system as claimed in claim 7 or claim 8 or an engine as claimed in claim 9.
